(19) Europäisches Patentamt / European Patent Office / Office européen des brevets

(11) **EP 3 706 279 B1**

(12) **EUROPEAN PATENT SPECIFICATION**

(45) Date of publication and mention
of the grant of the patent:
**30.11.2022 Bulletin 2022/48**

(21) Application number: **18872454.6**

(22) Date of filing: **24.10.2018**

(51) International Patent Classification (IPC):
*H02J 7/00* (2006.01)    *B60L 53/63* (2019.01)
*B60L 53/66* (2019.01)    *B60L 53/67* (2019.01)
*B60L 53/31* (2019.01)

(52) Cooperative Patent Classification (CPC):
**H02J 7/00712; B60L 53/63; B60L 53/67;**
**H02J 7/0013; H02J 7/0034;** H02J 2310/48;
Y02E 60/00; Y02T 10/70; Y02T 10/7072;
Y02T 90/12; Y02T 90/16; Y04S 10/126

(86) International application number:
**PCT/CN2018/111528**

(87) International publication number:
**WO 2019/085797 (09.05.2019 Gazette 2019/19)**

(54) **METHOD FOR ADJUSTING OUTPUT POWER OF CHARGING DEVICE**

VERFAHREN ZUR EINSTELLUNG DER AUSGANGSLEISTUNG EINER LADEVORRICHTUNG

PROCÉDÉ DE RÉGLAGE DE LA PUISSANCE DE SORTIE D'UN DISPOSITIF DE CHARGE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **31.10.2017 CN 201711047388**

(43) Date of publication of application:
**09.09.2020 Bulletin 2020/37**

(73) Proprietor: **NIO (Anhui) Holding Co., Ltd.
Hefei City, Anhui Province (CN)**

(72) Inventor: **ZHU, Tong
Shanghai (CN)**

(74) Representative: **Vossius & Partner
Patentanwälte Rechtsanwälte mbB
Siebertstrasse 3
81675 München (DE)**

(56) References cited:
CN-A- 106 712 166    CN-A- 106 809 043
CN-A- 106 887 086    CN-A- 106 956 610
CN-A- 107 872 084    JP-A- 2015 109 755
US-A1- 2016 257 214    US-A1- 2017 274 792

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

**Technical Field**

The invention belongs to the technical field of electric vehicle charging, and particularly relates to a method for adjusting an output power of a charging device.

**Background Art**

With the popularization of electric vehicles, charging devices have also been greatly developed. However, there are energy bottlenecks in the deployment of charging devices. Taking a charging pile as an example, assume that the rated output power of a charging pile group in a certain residential quarter is $P_m$, and the rated maximum output power of each charging pile in the pile group is $P_n$, so the maximum number of charging piles, in the charging pile group, which can be used at the same time is no more than $P_m/P_n$, that is to say, the total number of vehicles that can be charged at the same time in the residential quarter is also limited to the maximum number of charging piles. In this case, it will often lead to energy bottleneck problems in a peak charging hour, making some vehicles lack available piles during the peak charging hour, while having a large number of charging piles idle during an idle hour. US2017/274792A1 discloses a dynamic allocation of power modules for charging electric vehicles, wherein the power modules may be allocated across the different dispensers such that each of the dispensers are allocated at least some power modules. US2016/257214A1 discloses a system and methods for local autonomous response to grid conditions by electric vehicle charging station, in order to overcome limitation on the number of EVSEs on a circuit, wherein the capacity, content, and demand predictions will be combined with the Vehicle-level information on the maximum charging power to produce a distribution of the minimum and maximum charge current that is likely available at a given Head-Vehicle combo at

any given time.

In addition, since the charging demand of a vehicle is not "to be charged as fast as possible" for most of the time, how to balance the output power of a single charging pile, the total maximum output power of a pile group, and the charging demand of the vehicle have become an urgent problem to be solved in the field.

**Summary of the Invention**

In order to solve the problem of a low utilization rate of a charging device in a peak charging hour due to the shortage of energy, the invention provides a method as defined in claim 1. In particular, the invention is a method for adjusting an output power of a plurality of charging devices within a charging device group. Where an object to be charged is newly connected, the method involves determining whether a charging device group is in a full-load state. Further, the method involves, if the charging device group is in the full-load state, determining a total output power deficit $P_{def}$ of the charging device group and a maximum reduction magnitude $\Sigma\Delta P$ of a total output power of the charging device group. Additionally, based on $P_{def}$ and $\Sigma\Delta P$, the method further involves selectively reducing the output power of the charging devices within the charging device group in use. The step of "determining a total output power deficit $P_{def}$" specifically comprises subtracting the total rated maximum output power of the charging device group from the total output power of the charging device group after the newly connected object is connected to the charging device group. The the step of "determining a maximum reduction magnitude $\Sigma\Delta P$ of a total output power of the charging device group" specifically comprises, for each of the charging devices in use: acquiring the rated maximum output power $P_n$ of the charging device in use; acquiring identification information of an object to be charged by the charging device in use; and, based on the rated maximum output power $P_n$ and the identification information of the object to be charged, calculating the maximum reduction magnitude $\Delta P_n$ of the output power of the charging device in use; and

$$\Sigma\Delta P=\Delta P_1+\Delta P_2+\Delta P_3+\cdots\ldots\Delta P_n$$

wherein $\Delta P_1$, $\Delta P_2$, $\Delta P_3$, ... $\Delta P_n$ respectively correspond to the maximum reduction magnitude of an output power of each charging device in the charging device group.

Further embodiments are disclosed in the dependent claims.

In a preferred embodiment of the above method, the step of "based on $P_{def}$ and $\Sigma\Delta P$, selectively reducing the output power of the charging device in use" specifically comprises: if $P_{def} \leq \Sigma\Delta P$, reducing the output power of the charging device in use, so that a charging device of a newly connected object to be charged can charge the object to be charged according to demands; and if $P_{def} > \Sigma\Delta P$, not reducing the output power of the charging device in use, so that the newly connected object to be charged is in a waiting state.

In a preferred embodiment of the above method, the identification information of the object to be charged comprises: a remaining electric quantity demand E of the object to be charged; and a continuously charging time t of the object to be charged, wherein the continuously charging time t is obtained according to the charging demand provided by a user, or based on charging habit record information of the user.

In a preferred embodiment of the above method, the step of "based on the rated maximum output power $P_n$ and the identification information of the object to be charged, calculating the maximum reduction magnitude $\Delta P_n$ of the output power of the charging device in use" is realized with the following formula: $\Delta P_n = (P_n - E/t)$, where $E/t$ is the minimum output power required by a charging device to replenish an object to be charged with an electric quantity E within a continuously charging time t of the object to be charged; and $P_n$ corresponds to the rated maximum output power of the charging device.

In a preferred embodiment of the above method, the step of "if $P_{def} \le \sum \Delta P$, reducing the output power of the charging device in use, so that a charging device of a newly connected object to be charged can charge the object to be charged according to demands" specifically comprises: using the following formula to calculate a degradation magnitude $L_n$ of the output power of the charging device in use, where n is a natural number greater than or equal to one: $L_n = (\Delta P_n * P_{def}) / \sum \Delta P$; and reducing the output power of the corresponding charging device according to the degradation magnitude $L_n$.

In a preferred embodiment of the above method, after the step of "reducing the output power of the charging device in use", the method further comprises: when there is an object to be charged that is separated from the charging device group, determining again whether the charging device group is in a full-load state; and according to a determination result, selectively improving the output power of the charging device whose output power has previously been reduced.

In a preferred embodiment of the above method, the step of "according to a determination result, selectively improving the output power of the charging device whose output power has previously been reduced" specifically comprises: if the charging device group is still in a full-load state, not improving the output power of the charging device whose output power has previously been reduced; and if the charging device group is not in a full-load state, improving the output power of the charging device whose output power has previously been reduced.

In a preferred embodiment of the above method, the step of "improving the output power of the charging device whose output power has previously been reduced" specifically comprises: determining a difference value between the maximum output power and the current output power of the charging device group; determining a power reduction magnitude of the charging device whose output power has previously been reduced; comparing the difference value with the power reduction magnitude; and improving, according to the comparison result, the output power of the charging device whose output power has previously been reduced.

In a preferred embodiment of the above method, the step of "improving, according to a comparison result, the output power of the charging device whose output power has previously been reduced" specifically comprises: when the difference value is greater than or equal to the power reduction magnitude, taking the power reduction magnitude as the magnitude value to improve the output power of the charging device whose output power has previously been reduced; and when the difference value is smaller than the power reduction magnitude, taking the difference value as the magnitude value to improve the output power of the charging device whose output power has previously been reduced.

In a preferred embodiment of the above method, the charging device is a charging pile; and/or the object to be charged is an electric vehicle.

In a preferred embodiment of the above method, the method is implemented by a backend system or a cloud system, and each charging device in the charging device group is connected to the backend system or the cloud system.

The technical solution of the invention solves the problem of a low utilization rate of a charging device in a peak charging hour due to the shortage of energy. Specifically, after an object to be charged is connected to a charging device group, if the charging device group is fully loaded, the number of objects to be charged simultaneously served by the charging device group can be greatly increased by dynamically allocating the output power of each charging device in the group (such as reducing the output power of some charging devices), thereby maximizing the utilization rate of the charging devices. In addition, in the case where the output power of the charging device has been reduced, when there is an object to be charged that is separated from the charging device group, the output power of the charging device whose output power has previously been reduced is selectively improved by determining again whether the charging device group is in a full-load state, thereby ensuring that the charging device can work efficiently with the maximum output power (not exceeding the rated maximum output power of the charging device) on the premise of improving the utilization rate of the charging device.

## Brief Description of the Drawings

FIG. 1 is a flowchart of the main steps of the method for adjusting an output power of a charging device of the invention;
FIG. 2 is a detailed flowchart of reducing the output power of the charging device in the method for adjusting the output power of the charging device of the invention.

FIG. 3 is a detailed flowchart of improving the output power of the charging device in the method for adjusting the output power of the charging device of the invention.

## Detailed Description

Some examples are described below with reference to the accompanying drawings. It should be understood by those skilled in the art that these examples are only for explaining the technical principles of the invention and are not intended to limit the scope of protection of the invention. For example, although each step of the method of the invention is described in a specific order in this application, these orders are not to be regarded in a restrictive sense. Without departing from the basic principles of the invention, those skilled in the art may perform the steps in different orders, those modifications being covered by the invention if they do not contradict the appended claims.

To facilitate the description of the technical solution, a charging pile is taken as an example for the charging device, and an electric vehicle as an example for the object to be charged. However, the charging device is obviously not limited to charging piles, nor is the object to be charged limited to electric vehicles.

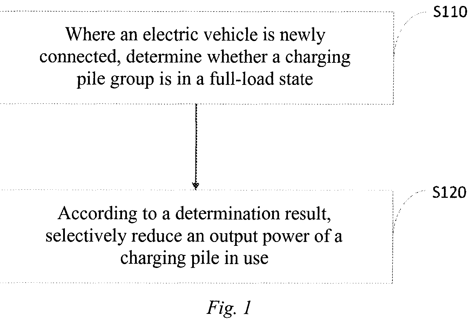

Referring to FIG. 1, FIG. 1 is a main flowchart of a method for adjusting an output power of a charging device. As shown in FIG. 1, the method comprises the following steps: S110, where an electric vehicle is newly connected, determining whether a charging pile group is in a full-load state; and S120, according to a determination result, selectively reducing an output power of a charging pile in use.

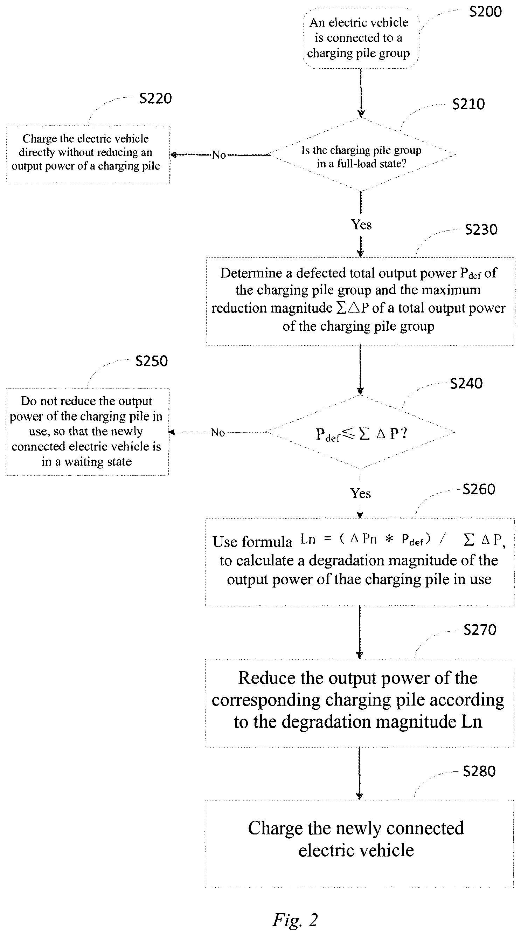

By means of the above steps S110 and S120, if the charging demand of the electric vehicle being charged is not fully charged in the shortest time (i.e., it is not required that each charging pile works at the maximum output power), the number of electric vehicles simultaneously served by the charging pile group can be greatly increased by dynamically allocating the output power of the charging piles (such as reducing the output power of some charging piles), thereby maximizing the utilization rate of the charging piles. The method will be further described in detail below with reference to FIG. 2.

FIG. 2 is a detailed flowchart of reducing the output of the output power of a charging device in the method for adjusting the output power of the charging device. As shown in FIG. 2, the process starts with step S200: an electric vehicle is connected to a charging pile group; then proceed to step S210: determining whether the charging pile group is in a full-load state; if not, proceed to step S220: charging the electric vehicle directly without reducing an output power of the charging pile; and if so, proceed to step S230: determining a total output power deficit $P_{def}$ of a charging device group and the maximum reduction magnitude $\sum \Delta P$ of a total output power of the charging device group.

Then proceed to step S240: comparing $P_{def}$ with $\sum \Delta P$ and determining whether $P_{def}$ is less than or equal to $\sum \Delta P$; if not, it indicates that the current maximum reduction magnitude $\sum \Delta P$ of the total output power of the charging device group cannot enable a newly connected vehicle to be charged normally, and then proceed to step S250: not reducing the output power of the charging pile in use, so that the newly connected electric vehicle is in a waiting state; and if there are a plurality of electric vehicles that are in a waiting state, making them queue in time order.

If $P_{def}$ is less than or equal to $\sum \Delta P$, it indicates that the current maximum reduction magnitude $\sum \Delta P$ of the total output power of the charging device group is sufficient to enable the newly connected vehicle to be charged normally. At this time, proceed to step S260: using formula $L_n = (\Delta P_n * P_{def}) / \sum \Delta P$, to calculate a degradation magnitude of the output power of the charging pile in use, where n is a natural number greater than or equal to one, $L_n$ is the degradation magnitude of the output power of the charging pile in use, $\Delta P_n$ is the maximum reduction magnitude of the output power of the charging pile in use, $P_{def}$ is the total output power deficit of the charging pile group, and $\sum \Delta P$ is the maximum reduction magnitude of the total output power of the charging pile group.

As an example, the maximum reduction magnitude $\Delta P_n$ of the output power of the charging pile in use can be calculated through formula $\Delta P_n = (P_n - E/t)$, where $P_n$ is the rated maximum output power of the charging pile in use, which is known; E is the remaining electric quantity demand of the electric vehicle, which can be obtained by subtracting the current electric quantity of the electric vehicle (included in identification information of the vehicle) from the required electric quantity of the electric vehicle (such as sending the required electric quantity of the electric vehicle to a service end when sending a charging service); and t is the continuously charging time of the electric vehicle, which can be obtained in various ways, such as using the cloud, and one of the main functions of the cloud is to master charging demand of a user, the source of the charging demand can be charging orders issued by the user (the user specifies the time period to complete charging), or the cloud can calculate the available charging period of time of the user according to his/her driving habits (for example, the user is used to working from 1 pm to 5 pm, which can be used for charging), and it can also be some other ways to acquire the available charging time of the user. Through the total available charging time of the user and the charging starting time of the user recorded in the cloud, the continuously charging time of the vehicle can be obtained. In short, both E and t can be obtained by the server according to the identification information of the electric vehicle, and the specific acquisition methods will not be described in detail here. Therefore, E/t is the minimum output power required by a charging pile to replenish a vehicle with an electric quantity E within a continuously charging time t of the vehicle. The maximum reduction magnitude $\Delta P_n$ of the output power of the charging pile in use can be calculated through the formula.

The maximum reduction magnitude $\Sigma \Delta P$ of the total output power of the charging pile group is the sum of the maximum reduction magnitude $\Delta P_n$ of the output power of each charging pile, i.e., $\Sigma \Delta P = \Delta P_1 + \Delta P_2 + \Delta P_3 + \cdots \cdots \Delta P_n$. After calculating $\Lambda P_n$, the value of $\Sigma \Lambda P$ can be calculated.

The total output power deficit $P_{def}$ of the charging pile group can be calculated by subtracting the total rated maximum output power of the charging pile group from the total output power of the charging pile group after the electric vehicle is connected to the charging pile group, so as to calculate the total output power deficit $P_{def}$ of the charging pile group.

After calculating the above values, the degradation magnitude of the output power of the charging pile in use can be calculated through formula $L_n = (\Delta P_n * P_{def}) / \Sigma \Delta P$. Then proceed to step S270: reducing the output power of the corresponding charging pile according to the degradation magnitude $L_n$. Specifically, the degradation magnitude of the corresponding charging pile is calculated as $L_1$, $L_2$, $L_3$, $L_4$ ........ $L_n$, and an instruction is sent to the corresponding charging pile according to the degradation magnitude, and the charging pile will reduce the output power after receiving the instruction. Finally, proceed to step S280:

Regarding the degradation magnitude of an output power of a charging pile in use, it should be pointed out that although a specific calculation method is given above, this is not to be regarded in a restrictive sense. It is however obvious that the degradation magnitude can be calculated by means of other methods, as long as the degradation magnitude of each charging pile can be calculated accurately without affecting the charging operation currently in progress. Moreover, although the calculation method of each parameter is described above, there is no limitation to these specific methods, as long as the parameters required by the solution can be obtained, those skilled in the art can adopt any appropriate method.

After reducing the output power of the charging pile in use, the method further comprises the following steps: Step One: when there is an electric vehicle that is separated from a charging pile group, determining again whether the charging pile group is in a full-load state; and Step Two: according to a determination result, selectively improving the output power of the charging pile whose output power has previously been reduced.

The purpose of reducing the charging piles in use is to meet the charging demand of more electric vehicles in a peak charging hour, and the charging time of the charging piles whose output power has been reduced will correspondingly increase; in such cases (the output power of the charging pile is reduced to meet the requirement that the charging pile group in a full-load state can serve more new energy vehicles), once there is a new energy vehicle that is separated from the charging pile group, it is necessary to determine again whether the charging pile group is in a full-load state; and if the charging pile group is in a full-load state at the moment, it may indicate that after the electric vehicle leaves, a new electric vehicle is connected (or an electric vehicle in the queue is being charged), and at this time, the output power of the charging device whose output power has previously been reduced will not be improved; and if the charging pile group is not in a full-load state at the moment, the output power of the charging pile whose output power has previously been reduced will be improved, thereby ensuring that the charging pile can work efficiently with the maximum output power (not exceeding the rated maximum output power of the charging pile) on the premise of improving the utilization rate of the charging pile.

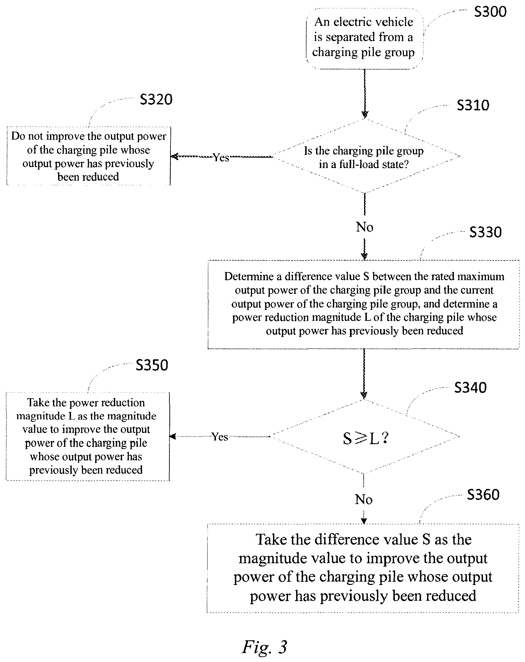

Referring to FIG. 3, FIG. 3 is a detailed flowchart of improving the output power of the charging device in the method for adjusting the output power of the charging device. As shown in FIG. 3, start with step S300: an electric vehicle is separated from a charging pile group. Then proceed to step S310: determining whether the charging pile group is in a full-load state; if so, proceed to step S320: not improving the output power of the charging pile whose output power has previously been reduced; and if not (the charging pile group is not in a full-load state), then proceed to step S330: determining a difference value S between the rated maximum output power of the charging pile group and the current output power of the charging pile group, and determining a power reduction magnitude L of the charging pile whose output power has previously been reduced. Specifically, the difference value S is essentially the power quota vacated by the electric vehicle that has just been separated from the charging pile group.

Then proceed to step S340: comparing S and L, and determining whether S is greater than or equal to L; if so, it indicates that the power quota vacated by the electric vehicle that has just been separated from the charging pile group is enough to restore all the charging piles, whose output power has previously been reduced, to the maximum power state, and at this time, accordingly, proceed to step S350: taking the power reduction magnitude L as the magnitude value to improve the output power of the charging pile whose output power has previously been reduced; and if not, it indicates that the power quota vacated by the electric vehicle that has just been separated from the charging pile group is not enough to restore all the charging piles, whose output power has previously been reduced, to the maximum power state, and at this time, accordingly, proceed to step S360: taking the difference value S as the magnitude value to improve the output power of the charging pile whose output power has previously been reduced.

When the output power of the charging pile is reduced, the degradation magnitude of the output power of the charging pile in use is calculated through the formula $L_n = (\Delta P_n * P_{def}) / \Sigma \Delta P$, that is to say, the output power of a plurality of charging piles is reduced according to a certain weight to meet the charging demand of the newly connected electric vehicle. Therefore, once there is an electric vehicle that is separated from the charging pile group, at the time, the difference value between the rated maximum output power of the charging pile group and the current output power of the charging pile group can be used, according to the same weight (the same weight as when the output power of the charging piles is reduced), to improve the output power of a plurality of charging piles whose output power has been reduced. More specifically, if the difference value S is large enough (greater than the total power reduction magnitude L of the charging pile group), the output power of the charging pile whose output power has previously been reduced is improved to the rated maximum output power; and if the difference value S is less than the total power reduction magnitude L of the charging pile group, the output power of a plurality of charging piles will all be improved according to the magnitude of the difference value and the same weight, and the total power improvement magnitude of the charging pile group shall not exceed the difference value S.

Optionally, each charging pile of the charging pile group is connected to the cloud system, and the cloud system can obtain the information such as the rated maximum output power of each charging pile, the rated total output power of the charging pile group and the charging demand of the newly connected electric vehicle. In this way, the output power of the charging pile can be controlled through the cloud system.

In summary, the technical solution solves the problem of a low utilization rate of a charging device in a peak charging hour due to the shortage of energy. After an electric vehicle is connected to a charging pile group, if the charging pile group is fully loaded, the number of electric vehicles simultaneously served by the charging pile group can be greatly increased by dynamically allocating the output power of the charging piles (such as reducing the output power of some charging piles), thereby maximizing the utilization rate of the charging piles. In addition, in the case where the output power of the charging pile has been reduced, when there is an electric vehicle that is separated from the charging pile, the output power of the charging pile whose output power has previously been reduced is selectively improved by determining again whether the charging pile group is in a full-load state, so as to ensure that the charging pile can work efficiently with the maximum output power (not exceeding the rated maximum output power of the charging pile) on the premise of improving the utilization rate of the charging pile.

**Claims**

1. A method for adjusting an output power of a plurality of charging devices within a charging device group, wherein the method comprises the following steps:

   where an object to be charged is newly connected, determining whether a charging device group is in a full-load state (S110),
   **characterized in that** if the charging device group is in the full-load state (S210), determining a total output power deficit $P_{def}$ of the charging device group and a maximum reduction magnitude $\sum \Delta P$ of a total output power of the charging device group (S230); and
   based on $P_{def}$ and $\sum \Delta P$, selectively reducing (S120, S270) the output power of the charging devices within the charging device group in use,
   wherein the step of "determining a total output power deficit $P_{def}$" specifically comprises subtracting the total rated maximum output power of the charging device group from the total output power of the charging device group after the newly connected object is connected to the charging device group;
   wherein the step of "determining a maximum reduction magnitude $\sum \Delta P$ of a total output power of the charging device group" specifically comprises, for each of the charging devices in use:

      acquiring the rated maximum output power $P_n$ of the charging device in use;
      acquiring identification information of an object to be charged by the charging device in use; and
      based on the rated maximum output power $P_n$ and the identification information of the object to be charged, calculating the maximum reduction magnitude $\Delta P_n$ of the output power of the charging device in use; and

$$\sum \Delta P = \Delta P_1 + \Delta P_2 + \Delta P_3 + \cdots \cdots \Delta P_n;$$

      wherein $\Delta P_1, \Delta P_2, \Delta P_3 \cdots \Delta P_n$ respectively correspond to the maximum reduction magnitude of an output power of each charging device in the charging device group.

2. The method according to claim 1, **characterized in that** the step of "based on $P_{def}$ and $\sum \Delta P$, selectively reducing the output power of the charging device in use" specifically comprises:

if $P_{def} \leq \sum \Delta P$ (S240), reducing (S270) the output power of the charging device in use, so that a charging device of the newly connected object to be charged can charge the object to be charged according to demands; and
if $P_{def} > \sum \Delta P$, not reducing the output power of the charging device in use, so that the newly connected object to be charged is in a waiting state.

**3.** The method according to claim 1, **characterized in that** the identification information of the object to be charged comprises:

a remaining electric quantity demand E of the object to be charged; and
a continuously charging time t of the object to be charged;
wherein the continuously charging time t is obtained according to the charging demand provided by a user, or based on charging habit record information of the user.

**4.** The method according to claim 3, **characterized in that** the step of "based on the rated maximum output power $P_n$ and the identification information of the object to be charged, calculating the maximum reduction magnitude $\Delta P_n$ of the output power of the charging device in use" is realized with the following formula:

$$\Delta P_n = (P_n - E/t);$$

where E/t is the minimum output power required by a charging device to replenish an object to be charged with an electric quantity E within a continuously charging time t of the object to be charged; and $P_n$ corresponds to the rated maximum output power of the charging device.

**5.** The method according to claim 4, **characterized in that** the step of "if $P_{def} \leq \sum \Delta P$, reducing the output power of the charging device in use, so that a charging device of a newly connected object to be charged can charge the object to be charged according to demands" specifically comprises:

using (S260) the following formula to calculate a degradation magnitude $L_n$ of the output power of the charging device in use, where n is a natural number greater than or equal to one:

$$L_n = (\Delta P_n * P_{def}) / \sum \Delta P;$$

and
reducing (S270) the output power of the corresponding charging device according to the degradation magnitude $L_n$.

**6.** The method according to claim 2, **characterized in that** after the step of "reducing the output power of the charging device in use", the method further comprises:

when there is an object to be charged that is separated from the charging device group, determining again whether the charging device group is in a full-load state; and
according to a determination result, selectively improving the output power of the charging device whose output power has previously been reduced.

**7.** The method according to claim 6, **characterized in that** the step of "according to a determination result, selectively improving the output power of the charging device whose output power has previously been reduced" specifically comprises:

if the charging device group is still in a full-load state, not improving the output power of the charging device whose output power has previously been reduced; and
if the charging device group is not in a full-load state, improving the output power of the charging device whose output power has previously been reduced.

**8.** The method according to claim 7, **characterized in that** the step of "improving the output power of the charging device whose output power has previously been reduced" specifically comprises:

determining a difference value between the maximum output power and the current output power of the charging device group;

determining a power reduction magnitude of the charging device whose output power has previously been reduced;

comparing the difference value with the power reduction magnitude; and

improving, according to the comparison result, the output power of the charging device whose output power has previously been reduced.

9. The method according to claim 8, **characterized in that** the step of "improving, according to a comparison result, the output power of the charging device whose output power has previously been reduced" specifically comprises:

when the difference value is greater than or equal to the power reduction magnitude, taking the power reduction magnitude as the magnitude value to improve the output power of the charging device whose output power has previously been reduced; and

when the difference value is smaller than the power reduction magnitude, taking the difference value as the magnitude value to improve the output power of the charging device whose output power has previously been reduced.

10. The method according to any one of claims 1 to 9, **characterized in that** the charging device is a charging pile; and/or the object to be charged is an electric vehicle.

11. The method according to any one of claims 1 to 9, **characterized in that** the method is implemented by a backend system or a cloud system, and each charging device in the charging device group is connected to the backend system or the cloud system.

**Patentansprüche**

1. Verfahren zum Justieren einer Ausgangsleistung mehrerer Ladevorrichtungen inherhalb einer Ladevorrichtungsgruppe, wobei das Verfahren die folgenden Schritte aufweist:

wenn ein zu ladendes Objekt neu angeschlossen wird, Bestimmen, ob sich eine Ladevorrichtungsgruppe in einem Volllastzustand befindet (S110),

**dadurch gekennzeichnet, dass**, wenn sich die Ladevorrichtungsgruppe im Volllastzustand befindet (S210), Bestimmen eines Gesamtausgangsleistungsdefizits $P_{def}$ der Ladevorrichtungsgruppe und einer maximalen Reduzierungsgröße $\Sigma\Delta P$ einer Gesamtausgangsleistung der Ladevorrichtungsgruppe (S230), und

basierend auf $P_{def}$ und $\Sigma\Delta P$ selektives Reduzieren (S210, S270) der Ausgangsleistung der Ladevorrichtungen innerhalb der Ladevorrichtungsgruppe im Gebrauch,

wobei der Schritt "Bestimmen eines Gesamtausgangsleistungsdefizits $P_{def}$" spezifisch das Subtrahieren der maximalen Gesamtnennausgangsleistung der Ladevorrichtungsgruppe von der Gesamtausgangsleistung der Ladevorrichtungsgruppe, nachdem das neu angeschlossene Objekt an die Ladevorrichtungsgruppe angeschlossen wird, aufweist,

wobei der Schritt "Bestimmen einer maximalen Reduzierungsgröße $\Sigma\Delta P$ einer Gesamtausgangsleistung der Ladevorrichtungsgruppe" spezifisch Folgendes für jede der Ladevorrichtungen im Gebrauch aufweist:

Beziehen der maximalen Nennausgangsleistung $P_n$ der Ladevorrichtung im Gebrauch,

Beziehen von Identifikationsinformationen eines Objekts, das durch die Ladevorrichtung im Gebrauch zu laden ist, und

basierend auf der maximalen Nennausgangsleistung $P_n$ und den Identifikationsinformationen des zu ladenden Objekts Berechnen der maximalen Reduzierungsgröße $\Delta P_n$ der Ausgangsleistung der Ladevorrichtung im Gebrauch, und

$$\Sigma\Delta P = \Delta P_1 + \Delta P_2 + \Delta P_3 + \ldots \Delta P_n,$$

wobei $\Delta P_1$, $\Delta P_2$, $\Delta P_3 \ldots \Delta P_n$ jeweils der maximalen Reduzierungsgröße einer Ausgangsleistung jeder Ladevorrichtung in der Ladevorrichtungsgruppe entsprechen.

**2.** Verfahren nach Anspruch 1, **dadurch gekennzeichnet, dass** der Schritt "basierend auf $P_{def}$ und $\Sigma\Delta P$ selektives Reduzieren der Ausgangsleistung der Ladevorrichtung im Gebrauch" spezifisch Folgendes aufweist:

wenn $P_{def} \leq \Sigma\Delta P$ (S240), Reduzieren (S270) der Ausgangsleistung der Ladevorrichtung im Gebrauch, so dass eine Ladevorrichtung des neu angeschlossenen zu ladenden Objekts das zu ladende Objekt gemäß dem Bedarf laden kann, und
wenn $P_{def} > \Sigma\Delta P$, kein Reduzieren der Ausgangsleistung der Ladevorrichtung im Gebrauch, so dass das neu angeschlossene zu ladende Objekt in einem Wartezustand ist.

**3.** Verfahren nach Anspruch 1, **dadurch gekennzeichnet, dass** die Identifikationsinformationen des zu ladenden Objekts Folgendes aufweisen:

einen verbleibenden elektrischen Quantitätsbedarf E des zu ladenden Objekts und
eine kontinuierliche Ladezeit t des zu ladenden Objekts,
wobei die kontinuierliche Ladezeit t gemäß dem von einem Nutzer bereitgestellten Ladebedarf oder basierend auf Aufzeichnungsinformationen des Nutzers zu Ladegewohnheiten gewonnen wird.

**4.** Verfahren nach Anspruch 3, **dadurch gekennzeichnet, dass** der Schritt "basierend auf der maximalen Nennausgangsleistung $P_n$ und den Identifikationsinformationen des zu ladenden Objekts Berechnen der maximalen Reduzierungsgröße $\Delta P_n$ der Ausgangsleistung der Ladevorrichtung im Gebrauch" mit der folgenden Formel realisiert wird:

$$\Delta P_n = (P_n - E/t),$$

wobei E/t die minimale Ausgangsleistung ist, die seitens einer Ladevorrichtung erforderlich ist, um ein zu ladendes Objekt mit einer elektrischen Quantität E innerhalb einer kontinuierlichen Ladezeit t des zu ladenden Objekts aufzufüllen, und $P_n$ der maximalen Nennausgangsleistung der Ladevorrichtung entspricht.

**5.** Verfahren nach Anspruch 4, **dadurch gekennzeichnet, dass** der Schritt "wenn $P_{def} \leq \Sigma\Delta P$, Reduzieren der Ausgangsleistung der Ladevorrichtung im Gebrauch, so dass eine Ladevorrichtung eines neu angeschlossenen zu ladenden Objekts das zu ladende Objekt gemäß dem Bedarf laden kann", spezifisch Folgendes aufweist:

Verwenden (S260) der folgenden Formel zum Berechnen einer Verminderungsgröße $L_n$ der Ausgangsleistung der Ladevorrichtung im Gebrauch, wobei n eine natürliche Zahl größer oder gleich eins ist:

$$L_n = (\Delta P_n * P_{def}) / \Sigma\Delta P,$$

und
Reduzieren (S270) der Ausgangsleistung der entsprechenden Ladevorrichtung gemäß der Verminderungsgröße $L_n$.

**6.** Verfahren nach Anspruch 2, **dadurch gekennzeichnet, dass** das Verfahren nach dem Schritt "Reduzieren der Ausgangsleistung der Ladevorrichtung im Gebrauch" ferner Folgendes aufweist:

erneutes Bestimmen, ob sich die Ladevorrichtungsgruppe in einem Volllastzustand befindet, wenn es ein zu ladendes Objekt gibt, das von der Ladevorrichtungsgruppe getrennt ist, und
selektives Verbessern der Ausgangsleistung der Ladevorrichtung, deren Ausgangsleistung vorher reduziert wurde, gemäß einem Bestimmungsergebnis.

**7.** Verfahren nach Anspruch 6, **dadurch gekennzeichnet, dass** der Schritt "selektives Verbessern der Ausgangsleistung der Ladevorrichtung, deren Ausgangsleistung vorher reduziert wurde, gemäß einem Bestimmungsergebnis" spezifisch Folgendes aufweist:

kein Verbessern der Ausgangsleistung der Ladevorrichtung, deren Ausgangsleistung vorher reduziert wurde, wenn sich die Ladevorrichtungsgruppe noch in einem Volllastzustand befindet, und
Verbessern der Ausgangsleistung der Ladevorrichtung, deren Ausgangsleistung vorher reduziert wurde, wenn sich die Ladevorrichtungsgruppe nicht in einem Volllastzustand befindet.

**8.** Verfahren nach Anspruch 7, **dadurch gekennzeichnet, dass** der Schritt "Verbessern der Ausgangsleistung der Ladevorrichtung, deren Ausgangsleistung vorher reduziert wurde," spezifisch Folgendes aufweist:

Bestimmen eines Differenzwertes zwischen der maximalen Ausgangsleistung und der aktuellen Ausgangsleistung der Ladevorrichtungsgruppe,
Bestimmen einer Leistungsreduzierungsgröße der Ladevorrichtung, deren Ausgangsleistung vorher reduziert wurde,
Vergleichen des Differenzwertes mit der Leistungsreduzierungsgröße und
Verbessern der Ausgangsleistung der Ladevorrichtung, deren Ausgangsleistung vorher reduziert wurde, gemäß einem Vergleichsergebnis.

**9.** Verfahren nach Anspruch 8, **dadurch gekennzeichnet, dass** der Schritt "Verbessern der Ausgangsleistung der Ladevorrichtung, deren Ausgangsleistung vorher reduziert wurde, gemäß einem Vergleichsergebnis," spezifisch Folgendes aufweist:

Nehmen der Leistungsreduzierungsgröße als den Größenwert zum Verbessern der Ausgangsleistung der Ladevorrichtung, deren Ausgangsleistung vorher reduziert wurde, wenn der Differenzwert größer oder gleich der Leistungsreduzierungsgröße ist, und
Nehmen des Differenzwertes als den Größenwert zum Verbessern der Ausgangsleistung der Ladevorrichtung, deren Ausgangsleistung vorher reduziert wurde, wenn der Differenzwert kleiner als die Leistungsreduzierungsgröße ist.

**10.** Verfahren nach einem der Ansprüche 1 bis 9, **dadurch gekennzeichnet, dass** die Ladevorrichtung eine Ladesäule ist und/oder das zu ladende Objekt ein Elektrofahrzeug ist.

**11.** Verfahren nach einem der Ansprüche 1 bis 9, **dadurch gekennzeichnet, dass** das Verfahren von einem Backend-System oder einem Cloud-System ausgeführt wird und jede Ladevorrichtung in der Ladevorrichtungsgruppe an das Backend-System oder das Cloud-System angeschlossen ist.

**Revendications**

**1.** Procédé de réglage d'une puissance de sortie d'une pluralité de dispositifs de chargement dans un groupe de dispositifs de chargement, dans lequel le procédé comprend les étapes suivantes :

là où un objet à charger est nouvellement connecté, déterminer si un groupe de dispositifs de chargement se trouve dans un état de chargement complet (S110),
**caractérisé en ce que** si le groupe de dispositifs de chargement se trouve dans l'état de chargement complet (S210), déterminer un déficit de puissance de sortie totale $P_{def}$ du groupe de dispositifs de chargement et une grandeur de réduction maximum $\Sigma \Delta P$ d'une puissance de sortie totale du groupe de dispositifs de chargement (S230) ; et
sur la base de $P_{def}$ et de $\Sigma \Delta P$, réduire (S120, S270) de manière sélective la puissance de sortie des dispositifs de chargement dans le groupe de dispositifs de chargement en cours d'utilisation,
dans lequel l'étape consistant à « déterminer un déficit de puissance de sortie totale $P_{def}$ » comprend spécifiquement soustraire la puissance de sortie maximum évaluée totale du groupe de dispositifs de chargement à partir de la puissance de sortie totale du groupe de dispositifs de chargement après que l'objet nouvellement connecté soit connecté au groupe de dispositifs de chargement ;
dans lequel l'étape consistant à « déterminer une grandeur de réduction maximum $\Sigma \Delta P$ d'une puissance de sortie totale du groupe de dispositifs de chargement » comprend spécifiquement, pour chacun des dispositifs de chargement en cours d'utilisation, :

acquérir la puissance de sortie maximum évaluée $P_n$ du dispositif de chargement en cours d'utilisation ;
acquérir des informations d'identification d'un objet à charger par le dispositif de chargement en cours d'utilisation ; et
sur la base de la puissance de sortie maximum évaluée $P_n$ et des informations d'identification de l'objet à charger, calculer la grandeur de réduction maximum $\Delta P_n$ de la puissance de sortie du dispositif de chargement en cours d'utilisation ; et

$$\Sigma \Delta P = \Delta P_1 + \Delta P_2 + \Delta P_3 + \dots \Delta P_n \ ;$$

dans lequel $\Delta P_1$, $\Delta P_2$, $\Delta P_3$... $\Delta P_n$ correspondent respectivement à la grandeur de réduction maximum d'une puissance de sortie de chaque dispositif de chargement dans le groupe de dispositifs de chargement.

2. Procédé selon la revendication 1, **caractérisé en ce que** l'étape consistant à « sur la base de $P_{def}$ et de $\Sigma \Delta P$, réduire de manière sélective la puissance de sortie du dispositif de chargement en cours d'utilisation » comprend spécifiquement :

   si $P_{def} \leq \Sigma \Delta P$ (S240), réduire (S270) la puissance de sortie du dispositif de chargement en cours d'utilisation, de sorte qu'un dispositif de chargement de l'objet nouvellement connecté à charger puisse charger l'objet à charger en fonction des demandes ; et
   si $P_{def} > \Sigma \Delta P$, ne pas réduire la puissance de sortie du dispositif de chargement en cours d'utilisation, de sorte que l'objet nouvellement connecté à charger se trouve dans un état d'attente.

3. Procédé selon la revendication 1, **caractérisé en ce que** les informations d'identification de l'objet à charger comprennent :

   une demande de quantité électrique restante E de l'objet à charger ; et
   un temps t de chargement en continu de l'objet à charger ;
   dans lequel le temps t de chargement en continu est obtenu en fonction de la demande de chargement par un utilisateur, ou sur la base des informations d'enregistrement d'habitudes de chargement de l'utilisateur.

4. Procédé selon la revendication 3, **caractérisé en ce que** l'étape consistant à « sur la base de la puissance de sortie maximum évaluée $P_n$ et des informations d'identification de l'objet à charger, calculer la grandeur de réduction maximum $\Delta P_n$ de la puissance de sortie du dispositif de chargement en cours d'utilisation » est réalisée avec la formule suivante :

$$\Delta P_n = (P_n - E/t) \ ;$$

   où E/t est la puissance de sortie minimum requise par un dispositif de chargement pour réapprovisionner un objet à charger avec une quantité électrique E dans un temps t de chargement en continu de l'objet à charger ; et $P_n$ correspond à la puissance de sortie maximum évaluée du dispositif de chargement.

5. Procédé selon la revendication 4, **caractérisé en ce que** l'étape consistant à « si $P_{def} \leq \Sigma \Delta P$), réduire la puissance de sortie du dispositif de chargement en cours d'utilisation, de sorte qu'un dispositif de chargement d'un objet nouvellement connecté à charger puisse charger l'objet à charger en fonction des demandes » comprend spécifiquement :

   l'utilisation (S260) de la formule suivante pour calculer une grandeur de dégradation $L_n$ de la puissance de sortie du dispositif de chargement en cours d'utilisation, où n est un nombre naturel supérieur ou égal à un :

$$L_n = (\Delta P_n * P_{def}) / \Sigma \Delta P \ ;$$

   et
   la réduction (S270) de la puissance de sortie du dispositif de chargement correspondant en fonction de la grandeur de dégradation $L_n$.

6. Procédé selon la revendication 2, **caractérisé en ce qu'**après l'étape consistant à « réduire la puissance de sortie du dispositif de chargement en cours d'utilisation », le procédé comprend en outre :

   lorsqu'il y a un objet à charger qui est séparé du groupe de dispositifs de chargement, déterminer de nouveau si le groupe de dispositifs de chargement se trouve dans un état de chargement complet ; et
   en fonction d'un résultat de détermination, améliorer de manière sélective la puissance de sortie du dispositif de chargement dont la puissance de sortie a été précédemment réduite.

**7.** Procédé selon la revendication 6, **caractérisé en ce que** l'étape consistant à « en fonction d'un résultat de détermination, améliorer de manière sélective la puissance de sortie du dispositif de chargement dont la puissance de sortie a été précédemment réduite » comprend spécifiquement :

si le groupe de dispositifs de chargement se trouve encore dans un état de chargement complet, ne pas améliorer la puissance de sortie du dispositif de chargement dont la puissance de sortie a été précédemment réduite ; et si le groupe de dispositifs de chargement ne se trouve pas dans un état de chargement complet, améliorer la puissance de sortie du dispositif de chargement dont la puissance de sortie a été précédemment réduite.

**8.** Procédé selon la revendication 7, **caractérisé en ce que** l'étape consistant à : « améliorer la puissance de sortie du dispositif de chargement dont la puissance de sortie a été précédemment réduite » comprend spécifiquement :

déterminer une valeur de différence entre la puissance de sortie maximum et la puissance de sortie actuelle du groupe de dispositifs de chargement ; déterminer une grandeur de réduction de puissance du dispositif de chargement dont la puissance de sortie a été précédemment réduite ; comparer la valeur de différence avec la grandeur de réduction de puissance ; et améliorer, en fonction du résultat de la comparaison, la puissance de sortie du dispositif de chargement dont la puissance de sortie a été précédemment réduite.

**9.** Procédé selon la revendication 8, **caractérisé en ce que** l'étape consistant à : « améliorer, en fonction d'un résultat de la comparaison, la puissance de sortie du dispositif de chargement dont la puissance de sortie a été précédemment réduite » comprend spécifiquement :

lorsque la valeur de différence est supérieure ou égale à la grandeur de réduction de puissance, prendre la grandeur de réduction de puissance en tant que valeur de grandeur pour améliorer la puissance de sortie du dispositif de chargement dont la puissance de sortie a été précédemment réduite ; et lorsque la valeur de différence est inférieure à la grandeur de réduction de puissance, prendre la valeur de différence en tant que valeur de grandeur pour améliorer la puissance de sortie du dispositif de chargement dont la puissance de sortie a été précédemment réduite.

**10.** Procédé selon l'une quelconque des revendications 1 à 9, **caractérisé en ce que** le dispositif de chargement est une pile de chargement ; et/ou l'objet à charger est un véhicule électrique.

**11.** Procédé selon l'une quelconque des revendications 1 à 9, **caractérisé en ce que** le procédé est mis en œuvre par un système dorsal ou un système en nuage, et chaque dispositif de chargement dans le groupe de dispositifs de chargement est connecté au système dorsal ou au système en nuage.

Where an electric vehicle is newly
connected, determine whether a charging
pile group is in a full-load state

S110

According to a determination result,
selectively reduce an output power of a
charging pile in use

S120

*Fig. 1*

S200

An electric vehicle
is connected to a
charging pile group

S210

Is the charging pile group
in a full-load state?

S220

Charge the electric vehicle
directly without reducing an
output power of a charging pile

No

Yes

S230

Determine a defected total output power $P_{def}$ of
the charging pile group and the maximum
reduction magnitude $\Sigma \triangle P$ of a total output power
of the charging pile group

S250

Do not reduce the output
power of the charging pile in
use, so that the newly
connected electric vehicle is
in a waiting state

No

S240

$P_{def} \leqslant \Sigma \triangle P$?

Yes

S260

Use formula $L_n = ( \triangle P_n * P_{def} ) / \Sigma \triangle P$,
to calculate a degradation magnitude of the
output power of thae charging pile in use

S270

Reduce the output power of the
corresponding charging pile according
to the degradation magnitude Ln

S280

Charge the newly connected
electric vehicle

*Fig. 2*

S300

An electric vehicle
is separated from a
charging pile group

S320

Do not improve the output power
of the charging pile whose
output power has previously
been reduced

←——Yes——

S310

Is the charging pile group
in a full-load state?

No

S330

Determine a difference value S between the rated maximum
output power of the charging pile group and the current
output power of the charging pile group, and determine a
power reduction magnitude L of the charging pile whose
output power has previously been reduced

S350

Take the power reduction
magnitude L as the magnitude
value to improve the output
power of the charging pile
whose output power has
previously been reduced

←——Yes——

S340

$S \geqslant L$?

No

S360

Take the difference value S as the
magnitude value to improve the output
power of the charging pile whose output
power has previously been reduced

*Fig. 3*

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2017274792 A1
- US 2016257214 A1